# EUROPEAN PATENT APPLICATION

(11) **EP 1 672 467 A1**
(43) Date of publication of application: **21.06.2006**
(21) Application number: 04029878.8
(22) Date of filing: 16.12.2004
(51) Int. Cl.: G06F 1/32

(54) **Power saving method and apparatus for electronic device**

(71) Applicant: TOPSEED TECHNOLOGY CORP., Chung Ho City, Taipei Hsien, Taiwan 235 (TW)
(72) Inventor: Chen, Shoei-Lai, Chung Ho City Taipei Hsien Taiwan 235 (TW)
(74) Representative: TER MEER - STEINMEISTER & PARTNER GbR

(57) **Abstract**

A power-saving apparatus and a power-saving method are disclosed for electronic device. A power-saving program is stored in the electronic device and is activated to a detecting and stand-by scanning state when the electronic device is turned on. The power-saving program detects the operation of an input unit with reference to a preset time parameter. The power-saving program detects an input operation of the input unit. The corresponding function for the input operation is performed and the power-saving program judges whether the input operation is a normal operation. The power-saving program performs a power-saving procedure to turn off power from the electronic device when the input operation is judged to be abnormal.

## Description

### BACKGROUND OF THE INVENTION

### 1. Field of the Invention

The present invention relates to a method and an apparatus for power saving of an electronic device, and more particularly to a method and an apparatus for detecting an elapsed time of operation for an input unit of an electronic device and turning off the an electronic device when an abnormal operation is judged. The method and apparatus can prevent the drawback of the prior art power-saving device, wherein the power is also consumed to wake up the electronic device.

### 2. Description of Prior Art

As the progress of manufacture technology, the consumer electronic products such as mobile phone, smart phone, portable computer, remote controller, personal digital assistance (PDA) and computer mouse have become more and more compact and versatile. More particularly, the electronic products with wireless communication function are easy to carry in pocket or bag, and have powerful functions.

The prior art electronic devices generally have input units on the surface thereof for facilitating user input function. The input units are subjected to erroneous input when the electronic devices are not covered by protective shell or not foldable. The input units are exposed and may have erroneous touch. The electronic devices may perform some user-unaware operation as the input units thereof are erroneously touched, especially when the electronic devices are placed in pocket or bag. The user-unaware operation may not be hazardous to the electronic devices themselves or the device controlled by them. However, certain electric power is consumed during the erroneous touch. The power exhaustion requires the user to change new battery or use external power socket, which is inconvenient.

The prior art electronic devices are also provided with power saving function such as hibernation function or screen shutdown, when no input or no operation is present for a predetermined time. However, the prior art electronic devices will be triggered to normal operation when the input unit thereof is operated. Therefore, this approach can not prevent power consumption due to erroneous touch.

Moreover, certain design provides keyboard/keypad lock to prior art electronic devices. For example, some mobile phones have key-locking function to disable key input function when the mobile phones are placed in pocket or bag. However, the display of the mobile phones will be triggered by key pressing to show unlock message. Power consumption still occurs when key is erroneously touched.

### SUMMARY OF THE INVENTION

The present invention is to provide a power-saving program in an electronic device and the power-saving program is activated when the electronic device is turned on or an input unit of the electronic device is set to a key-locking state. The power-saving program keeps detecting the operation time of the input unit and turns off the electronic device when the operation time of the input unit exceeds a preset time parameter. The power-saving apparatus and method of the present invention can prevent the electronic device from erroneous operation.

Accordingly, the present invention provides a method and an apparatus for power saving of an electronic device. The power-saving apparatus performs judgment for abnormal operation and turns off power from the electronic device when abnormal operation occurs. The power-saving apparatus has a power-saving program and the power-saving program can be activated to a detecting and stand-by scanning state. The power-saving program will turns off the electronic device when the operation of the input unit is judged as abnormal operation for its operation time exceeding a preset time parameter. The power-saving apparatus and method of the present invention can prevent malfunction or wrong turning on of the electronic device.

The above summaries are intended to illustrate exemplary embodiments of the invention, which will be best understood in conjunction with the detailed description to follow, and are not intended to limit the scope of the appended claims.

### BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows a schematic diagram of a power-saving apparatus for electronic device according to a preferred embodiment.
Fig. 2 shows a schematic diagram of a power-saving apparatus for electronic device according to another preferred embodiment.
Fig. 3 shows a flowchart of the power-saving method according to the present invention.

### DETAILED DESCRIPTION OF THE INVENTION

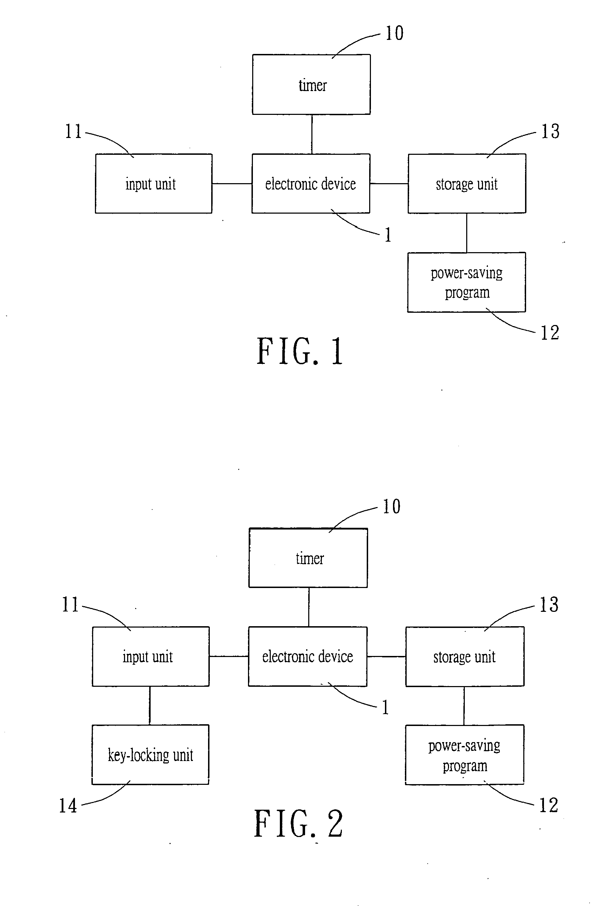

Referring to Fig. 1, a power-saving apparatus for electronic device according to a preferred embodiment is shown. In this preferred embodiment, the electronic device 1 may be a mobile phone, a smart phone, a portable computer, a remote controller, a PDA or a computer mouse. More particularly, the electronic device 1 may be equipped with wireless communication function. The electronic device 1 comprises an input unit 11 on a surface thereof for command input and data input, and a power-saving program 12 stored in a storage unit 13 of the electronic device 1 and used for providing power saving operation, The electronic device 1 further comprises a timer 10 to counting a time measurement for the input unit 11. This time measurement is used for judgment of erroneous operation with reference to a preset time.

The power-saving program 12 is configured to judge erroneous operation with reference to the preset time parameter, and to automatically perform a power saving procedure, namely turning off power from the electronic device 1, according to a judgment result. Moreover, the power-saving program 12 is activated to a detecting and stand-by scanning state when the electronic device 1 is turned on. Therefore, the power-saving program 12 will momently detect an erroneous touch to the input unit 11 and turn off power from the electronic device 1 for saving power.

Fig. 2 shows the block diagram of another preferred embodiment of the present invention. The electronic device 1 further comprises a key-locking unit 14 for activating a locking of the input unit 11 when the electronic device 1 is placed in pocket or bag. Therefore, the function of the input unit 11 is disabled even the input unit 11 is touched. Moreover, the key-locking unit 14 further drives the power-saving program 12 to the detecting and stand-by scanning state. The power-saving program 12 judges erroneous operation with reference to the preset time parameter; and automatically turns off power from the electronic device 1 for saving power.

The preset time parameter is input by user with the input unit 11 when the power-saving program 12 is activated. The preset time parameter is set for judgment criterion and functions as starting mechanism for the power saving procedure.

The power-saving apparatus according to the present invention is described above. Hereinafter, the power-saving method according to the present invention will be described with reference to related drawing.

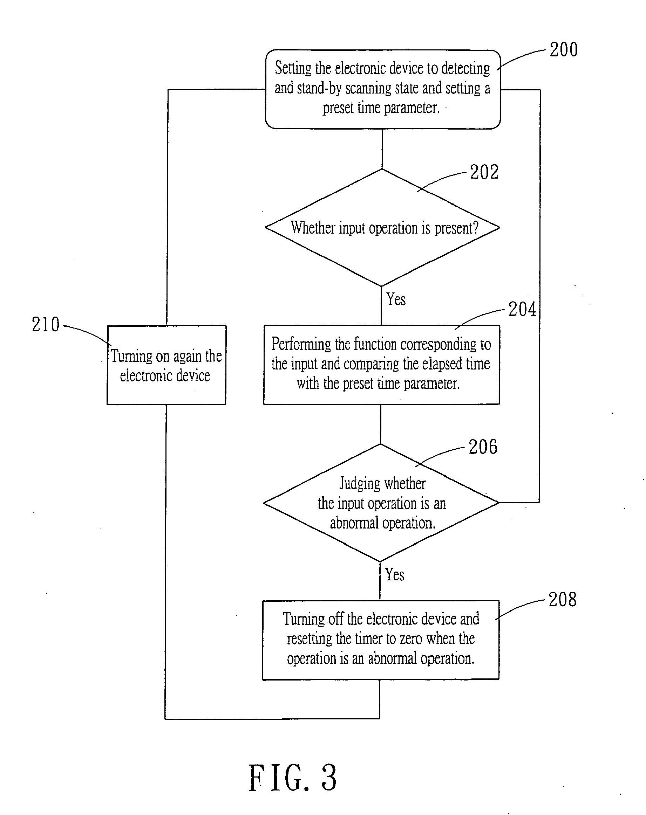

Fig. 3 shows a flowchart of the power-saving method according to the present invention. The electronic device 1 is installed with the power-saving program 12. The power-saving program 12 is automatically activated when the electronic device 1 is turned on. In a step 200, the electronic device 1 enters a detecting and stand-by scanning state after the power-saving program 12 is activated; and a preset time parameter is set to judge whether an erroneous operation is present. The electronic device 1 is kept to detect whether input or key-pressing operation is present in step 202. When an input or key-pressing operation is performed to the input unit 11, the electronic device 1 will perform the function input through the input unit 11, the timer 10 is activated to count elapsed time and compares the elapsed time with the preset time parameter in step 204.

Step 206 judges whether the input operation is an abnormal operation by determining the elapsed time being larger than the preset time parameter or not. If the input operation is judged to be an abnormal operation by a comparison result, the power-saving program 12 performs a power-saving procedure for the electronic device 1. The electronic device 1 is powered off for preventing from further operation and the timer 10 is reset to zero in step 208. The electronic device 1 is turned on again by user and the power-saving program 12 is activated to enter a detecting and stand-by scanning state in step 210.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. In an electronic device (1) with an input unit (11), a power-saving program (12) and a timer (10), a power-saving method for the electronic device (1) comprising steps of:
turning on the electronic device (1) and activating the power-saving program (12);
detecting an input operation of the input unit (11), performing corresponding function for the input operation and judging whether the input operation is a normal operation; and
the power-saving program (12) performing a power-saving procedure to turn off power from the electronic device (1) when the input operation is judged to be abnormal.

2. The method as in claim 1, further comprising a step of:
automatically executing the power-saving program (12) when the electronic device (1) is turned on.

3. The method as in claim 1, further comprising steps of:
using the input unit (11) to activate the power-saving program (12) to a detecting and stand-by scanning state and to input preset time parameter for judging an abnormal operation.

4. The method as in claim 1, whether the step of judging whether the input operation is a normal operation comprises:
activating a time counting function of the timer (10) when the input unit (11) is operated; and
comparing a counted time by the timer (10) and judging the operation being an abnormal operation when the counted time exceeds the preset time parameter.

5. In an electronic device (1) with an input unit (11), a power-saving program (12), a timer (10), and a key-locking unit (14), a power-saving method for the electronic device (1) comprising the steps of:
activating the power-saving program (12);
the electronic device (1) entering a detecting and stand-by scanning state by the activated power-saving program (12); setting a preset time parameter for judging an abnormal operation;
detecting an input operation of the input unit (11), performing corresponding function for the input operation and judging whether the input operation is a normal operation; and
the power-saving program (12) performing a power-saving procedure to turn off power from the electronic device (1) when the input operation is judged to be abnormal.

6. The method as in claim 5, further comprising a step of:
activating the power-saving program (12) for detecting and power-saving when the electronic device (1) activates the key-locking unit (14) to lock the input unit (11).

7. The method as in claim 5, further comprising a step of:
setting the preset time parameter with the input unit (11) before the electronic device (1) activates the key-locking unit (14).

8. A power-saving apparatus for an electronic device (1), comprising
an input unit (11) arranged in the electronic device (1);
a power-saving program (12) stored in the electronic device (1); and
a timer (10) arranged in the electronic device (1).

9. The power-saving apparatus for electronic device as in claim 8, wherein the electronic device (1) is one of mobile phone, smart phone, portable computer, remote controller, personal digital assistance (PDA) and computer mouse.

10. A power-saving apparatus for an electronic device (1), comprising
an input unit (11) arranged in the electronic device (1);
a key-locking unit (14) arranged in the electronic device (1) and used for disabling the input unit (11).
a power-saving program (12) stored in the electronic device (1); and
a timer (10) arranged in the electronic device.
